(19) Europäisches Patentamt
European Patent Office
Office européen des brevets

(11) Veröffentlichungsnummer : **0 099 336**
**B1**

(12) # EUROPÄISCHE PATENTSCHRIFT

(45) Veröffentlichungstag der Patentschrift : **16.04.86**

(51) Int. Cl.⁴ : **C 09 B 45/20**// D06P1/10

(21) Anmeldenummer : **83810307.5**

(22) Anmeldetag : **06.07.83**

(54) **1:2-Kobaltkomplexazofarbstoffe.**

(30) Priorität : **12.07.82 CH 4248/82**

(43) Veröffentlichungstag der Anmeldung : **25.01.84 Patentblatt 84/04**

(45) Bekanntmachung des Hinweises auf die Patenterteilung : **16.04.86 Patentblatt 86/16**

(84) Benannte Vertragsstaaten : **CH DE FR GB IT LI**

(56) Entgegenhaltungen :
**CH-A- 367 911**
**DE-B- 1 102 933**
**FR-A- 1 068 477**

(73) Patentinhaber : **CIBA-GEIGY AG**
**Klybeckstrasse 141**
**CH-4002 Basel (CH)**

(72) Erfinder : **Püntener, Alois, Dr.**
**Pulverweg 13**
**CH-4310 Rheinfelden (CH)**

**EP 0 099 336 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

1 : 2-Metallkomplexazofarbstoffe sind seit langem bekannt und werden in grossem Umfang für das Färben und Bedrucken von Textilien aus Fasermaterialien in den verschiedensten Nuancen eingesetzt. Angesichts der immer höheren Anforderungen an diese Farbstoffe z. B. in bezug auf das Echtheitsniveau, ist der erreichte technische Stand vielfach nicht voll befriedigend.

Insbesondere genügen viele der bekannten 1 : 2-Metallkomplexazofarbstoffe, die zur Erzielung gelber Nuancen eingesetzt werden, in der Lichtechtheit, wie sie beispielsweise für Autopolster benötigt wird, nicht den heutigen Anforderungen. Ferner neigen viele der bekannten gelben Farbstoffe in Mischungen mit anderen Farbstoffen zum Catalytic Fading, d. h. diese Farbstoffmischungen werden bei Belichtung stärker ausgebleicht als die entsprechenden Einzelkomponenten. Die der vorliegenden Erfindung zugrundeliegende Aufgabe war es, neue 1 : 2-Kobaltkomplexazofarbstoffe zur Erzielung vor allem grünstichig, gelber Nuancen zu finden, die bei leichter Zugänglichkeit und einfacher Applikationstechnik Färbungen ergeben, die den heutigen Echtheitsanforderungen genügen. Es hat sich gezeigt, dass die weiter unten definierten neuen 1 : 2-Kobaltkomplexazofarbstoffe diesen Anforderungen genügen, und dass mit diesen 1 : 2-Kobaltkomplexazofarbstoffen bei Kombination mit blauen Farbstoffen überraschend reine Grüntöne erhalten werden, die kein Catalytic Fading zeigen.

Gegenstand der vorliegenden Erfindung sind 1 : 2-Kobaltkomplexe von Azoverbindungen der Formel

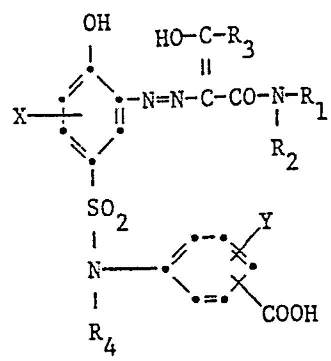

(1),

worin $R_1$ ein geradkettiger oder verzweigter $C_{1-12}$-Alkyl-, ein Cycloalkyl- oder ein Arylkylrest, der substituiert sein kann, und $R_2$ Wasserstoff oder $C_{1-4}$-Alkyl ist, oder worin $R_1$ und $R_2$ zusammen mit dem sie verbindenden Stickstoffatom einen heterocyclischen Ring bilden, der ein weiteres Heteroatom enthalten kann, und worin $R_3$ ein Methyl- oder Phenylrest, der substituiert sein kann, $R_4$ Wasserstoff oder $C_{1-4}$-Alkyl, X Wasserstoff, Halogen, Nitro oder $C_{1-4}$-Alkyl und Y Wasserstoff, Halogen, Nitro, $C_{1-4}$-Alkyl oder Carboxy ist, wobei zwei gleiche oder zwei voneinander verschiedene Moleküle einer Azoverbindung der Formel (1) an ein Kobaltatom gebunden sind.

Als Alkylrest kommt für $R_1$ in Formel (1) ein geradkettiger oder verzweigter $C_{1-12}$-vorzugsweise $C_{5-12}$-Alkylrest in Betracht, der auch substituiert sein kann, z. B. durch Halogen, wie Fluor, Chlor und Brom, Hydroxy, Cyan, $C_{1-4}$-Alkoxy, wie Methoxy, Aethoxy, Propoxy, Isoproposy, n-Butoxy, Isobutoxy, sec.-Butoxy und tert.-Butoxy, und Cycloalkylreste, wie z. B. Cyclopentyl, Cyclohexyl, Methylcyclohexyl und Cycloheptyl. Als Beispiele für $R_1$ als Alkylrest seien genannt : Methyl, Cyclohexylmethylen, Aethyl, β-Hydroxyäthyl, β-Cyanäthyl, β-Bromäthyl, β-Methoxyäthyl, n-Propyl, Isopropyl, γ-Isopropoxy-n-propyl, n-Butyl, sec.-Butyl, tert.-Butyl, n-Pentyl, 1-, 2- oder 3-Methylbutyl, n-Hexyl, n-Heptyl, 2-Aethyl-n-hexyl, n-Octyl, n-Decyl, n-Undecyl und n-Dodecyl.

Als Cycloalkylrest kommt für $R_1$ in Formel (1) vorzugsweise ein Cycloalkylrest mit 5 bis 7 Kohlenstoffatomen in Betracht, der auch substituiert sein kann, z. B. durch Halogen, wie Fluor, Chlor und Brom, $C_{1-4}$-Alkyl, wie Methyl, Aethyl, Propyl, Isopropyl und Butyl, $C_{1-4}$-Alkoxy, wie Methoxy, Aethoxy, Propoxy, Isopropoxy und Butoxy und Cyan. Als Beispiele für $R_1$ als Cycloalkylrest seien genannt : Cyclopentyl, Cyclohexyl, Methylcyclohexyl, 2-Chlorocyclohexyl, 4-Ethoxycyclohexyl und Cycloheptyl.

Als Aralkylrest kommt für $R_1$ in Formel (1) vorzugsweise ein Benzyl-Phenäthyl- und Naphthylmethylenrest in Betracht, der auch substituiert sein kann, z. B. durch Halogen, wie Fluor, Chlor und Brom, Hydroxy, Cyan, $C_{1-4}$-Alkoxy, wie Methoxy, Aethoxy, Propoxy, Isopropoxy und Butoxy, $C_{1-4}$-Alkyl, wie Methyl, Aethyl, Propyl, Isopropyl und Butyl, und Nitro. Als Beispiele für $R_1$ als Aralkylrest seien genannt : Benzyl, 2-Hydroxy-5-nitrobenzyl, 2-Hydroxy-4-nitrobenzyl, 3-Methoxybenzyl, 4-Chlorbenzyl, Phenäthyl und α- und β-Naphthylmethylen.

Als $C_{1-4}$-Alkylreste kommen für $R_2$, $R_4$, X und Y in Formel (1) unabhängig voneinander geradkettige oder verzweigte Alkylreste in Betracht, wie beispielsweise Methyl, Aethyl, Propyl, Isopropyl, Butyl, sec.Butyl, Isobutyl und tert.-Butyl.

Als heterocyclische Ringe kommen für $R_1$ und $R_2$ zusammen mit dem sie verbindenden Stickstoffatom vorzugsweise Heterocyclen mit 6-Ringatomen in Betracht, die noch ein weiteres Heteroatom, wie z.

B. ein Sauerstoff-, Stickstoff- oder Schwefelatom, enthalten können. Als Beispiele seien der Piperidyl- und der Morpholinrest genannt.

Für $R_3$ kommt als Methyl- oder Phenylrest, der auch substituiert sein kann, z. B. durch Halogen, wie Fluor, Chlor oder Brom, vorzugsweise der Chlormethyl-, Phenyl- und insbesondere der Methylrest in Betracht.

Als Halogen kommen für X und Y in Formel (1) unabhängig voneinander beispielsweise Fluor, Chlor und Brom in Betracht.

Bevorzugte Untergruppen sind die 1 : 2-Kobaltkomplexe von Azoverbindungen der Formel (1), worin

a) $R_4$ Methyl, Aethyl oder insbesondere Wasserstoff ist ; und

b) $R_3$ Chlormethyl, Phenyl oder insbesondere Methyl ist.

Bevorzugt sind ebenfalls die 1 : 2-Kobaltkomplexe von Azoverbindungen der Formel

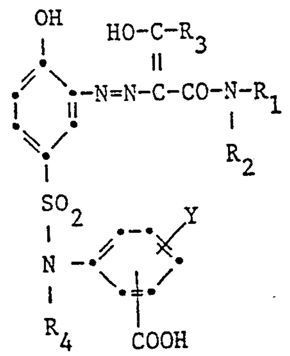

(2),

worin $R_1$, $R_2$, $R_3$, $R_4$ und Y die unter Formel (1) angegebenen Bedeutungen haben.

Besonders bevorzugt sind die 1 : 2-Kobaltkomplexe von Azoverbindungen der Formel

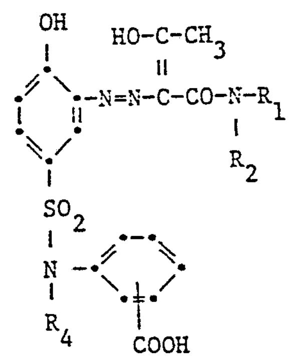

(3),

worin $R_1$ ein geradkettiger oder verzweigter $C_{2-12}$-Alkylrest, der durch $C_{1-4}$-Alkoxy substituiert sein kann, ein Cyclohexyl-, Cyclohexylmethylen- oder Benzylrest und $R_2$ Wasserstoff oder Methyl ist, oder worin $R_1$ und $R_2$ zusammen mit dem sie verbindenden Stickstoffatom einen Piperidin- oder Morpholinrest bilden und $R_4$ Wasserstoff oder Methyl ist.

Insbesondere bedeutet $R_1$ in Formel (3) einen $C_{5-12}$-Alkylrest. $R_2$ und $R_4$ in Formel (3) bedeuten insbesondere Wasserstoff.

Besonders bevorzugt sind auch die 1 : 2-Kobaltkomplexe von Azoverbindungen der Formel

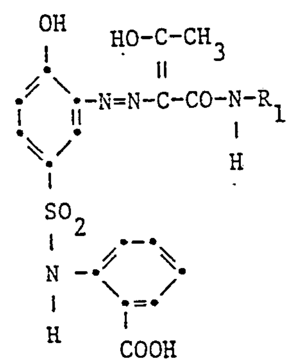

(4),

worin $R_1$ die unter Formel (3) angegebene Bedeutung hat.

In den bevorzugten 1 : 2-Kobaltkomplexen sind zwei identische Azoverbindungen der Formel (3) oder (4) an das Kobaltatom gebunden.

Ganz besonders bevorzugt ist der 1 : 2-Kobaltkomplex der Formel (5), worin Ka⊕ ein Alkalikation, ein Ammoniumion oder das Kation eines organischen Amins ist, insbesondere ist Ka⊕ ein Lithium-, Kalium- oder vorzugsweise ein Natriumkation.

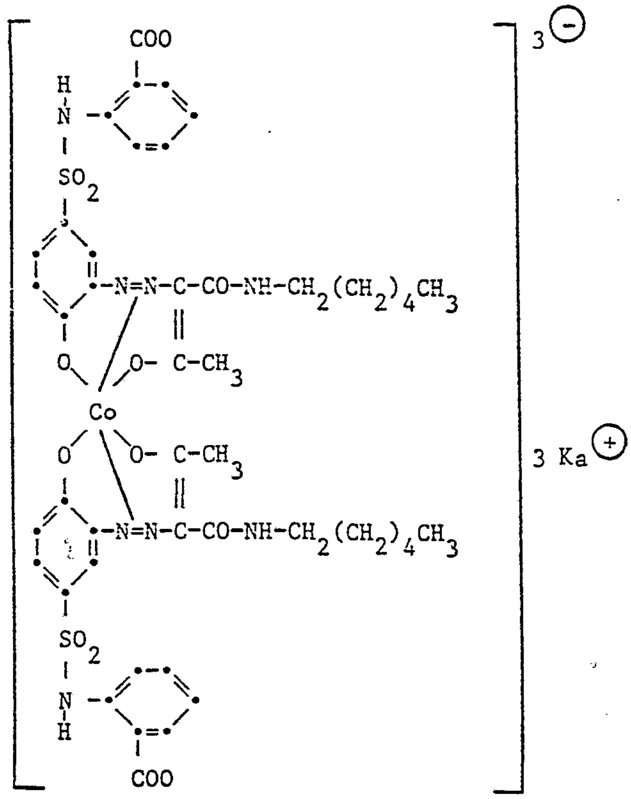

(5).

Die erfindungsgemässen 1 : 2-Kobaltkomplexe können nach an sich bekannten Verfahrensweisen hergestellt werden, beispielsweise indem man zwei gleiche oder zwei voneinander verschiedene Azoverbindungen der Formel (1) mit einem kobaltabgebenden Mittel umsetzt. Werden zwei voneinander verschiedene Azoverbindungen der Formel (1) mit einem kobaltabgebenden Mittel umgesetzt, so entsteht ein Gemisch von 1 : 2-Kobaltkomplexen welches neben den beiden symmetrischen 1 : 2-Komplexen noch einen asymmetrischen 1 : 2-Komplex enthält.

Zur Herstellung der bevorzugten 1 : 2-Kobaltkomplexe werden

a) Azoverbindungen der Formel (1) verwendet, worin $R_4$ Methyl, Aethyl oder insbesondere Wasserstoff ist.

b) Azoverbindungen der Formel (1) verwendet, worin $R_3$ Chlormethyl, Phenyl oder insbesondere Methyl ist.

c) Azoverbindungen der Formel (1) verwendet, worin $R_1$ ein geradkettiger oder verzweigter $C_{5-12}$-Alkyl-, ein Cycloalkyl- oder ein Aralkylrest, der substituiert sein kann, und $R_2$ Wasserstoff oder $C_{1-4}$-Alkyl ist, oder worin $R_1$ und $R_2$ zusammen mit dem sie verbindenden Stickstoffatom einen heterocyclischen Ring bilden, der ein weiteres Heteroatom enthalten kann.

d) Azoverbindungen der Formel (2) verwendet.

Zur Herstellung der besonders bevorzugten 1 : 2-Kobaltkomplexe werden Azoverbindungen der Formel (3) verwendet, und insbesondere solche Azoverbindungen der Formel (3), worin $R_1$ einen geradkettigen $C_{5-12}$-Alkylrest und/oder $R_2$ und $R_4$ Wasserstoff bedeuten. Vorzugsweise verwendet man Azoverbindungen der Formel (4).

Vorzugsweise werden ferner zwei identische Moleküle der Azoverbindungen der Formel (3) oder (4) mit einem Kobaltatom abgebenden Mittel umgesetzt.

Der 1 : 2-Kobaltkomplex der Formel (5) wird hergestellt, indem man zwei Moleküle des Azofarbstoffs der Formel

(Siehe Figur Seite 5 f.)

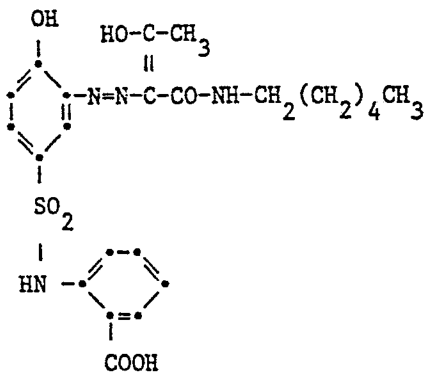

(6)

mit einem .ein Kobaltatom abgebenden Mittel umsetzt und den 1 : 2-Komplex als Alkali- oder Ammoniumsalz oder als Salz eines positiv geladenen organischen Amins abscheidet. Vorzugsweise wird der Komplex als Lithium- oder Kalium- und insbesondere als Natriumsalz abgeschieden.

Die in der vorliegenden Erfindung verwendeten Azoverbindungen der Formel (1) werden nach an sich bekannten Methoden durch Diazotierung eines Amins der Formel

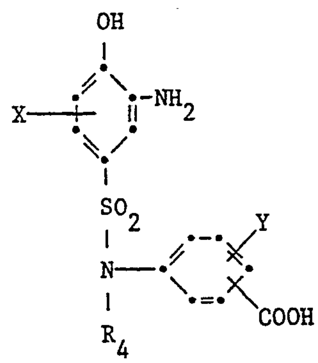

(7)

und Kupplung auf eine Kupplungskomponente der Formel

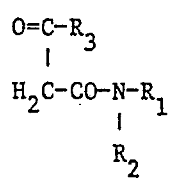

(8)

in schwach saurem, neutralem bis schwach alkalischem Medium erhalten.

Die Diazoverbindungen eines Amins der Formel (7) können nach an sich bekannten Methoden erhalten werden. Die Kupplungskomponenten der Formel (8) erhält man ebenfalls nach an sich bekannten Methoden, wie z. B. durch Umsetzung eines entsprechenden Amins mit einem Diketen.

Die Diazotierung des Amins der Formel (7) erfolgt nach an sich bekannten Methoden, z. B. mit Hilfe von Salzsäure und Natriumnitrit.

Die Metallisierung der Azoverbindungen der Formel (1) wird nach den üblichen Verfahren durchgeführt, z. B. mit Kobaltsulfat, Kobaltacetat oder frisch gefälltem Kobalthydroxyd vorzugsweise in wässriger Lösung, gegebenenfalls unter Zusatz von organischen Lösungsmitteln wie Alkoholen oder Dimethylformamid, oder aber in rein organischen Lösungsmiteln, z. B. in Alkoholen, Glykolen, Glykoläthern oder -estern, Glycerin oder Ketonen, wie z. B. Methylisobutylketon. Man metallisiert zweckmässig in schwach saurem bis alkalischem Medium, vorzugsweise im pH-Bereich zwischen 6 und 9. Zur Beschleunigung der Metallisierung kann der Reaktionslösung ein Oxidationsmittel, wie z. B. Wasserstoffperoxid oder Nitrophenolsulfonsäure zugegeben werden.

Die nach dem obigen Verfahren erhältlichen neuen 1 : 2-Kobaltkomplexfarbstoffe werden in Form ihrer Salze vorzugsweise als Alkalisalz, insbesondere als Natriumsalz oder auch als Ammoniumsalz oder als Salz eines organischen Amins mit positiv geladenem Stickstoffatom, wie z. B. als Salz des Triäthanolamins, isoliert.

Als Diazokomponenten, die für die Herstellung der Azoverbindungen der Formel (1) verwendet werden können, seien die Diazoverbindungen der folgenden Amine der Formel (7) als Beispiele genannt : 2'-Carboxy-2-aminophenol-4-sulfanilid, 3'-Carboxy-2-aminophenol-4-sulfanilid, 4'-Carboxy-2-aminophenol-4-sulfanilid, 2'-Carboxy-2-aminophenol-4-N-methyl-sulfanilid, 2'-Carboxy-2-aminophenol-4-N-äthyl-sulfanilid, 2'-Carboxy-2-aminophenol-5-N-methyl-sulfanilid.

Als Kupplungskomponenten, die für die Herstellung der Azoverbindungen der Formel (1) verwendet werden können, seien als Verbindungen der Formel (8) folgende als Beispiele genannt:

Acetessigsäure- methyl-, -äthyl-, -propyl-, -isopropyl-, butyl-, -pentyl-, -hexyl-, -heptyl-, -octyl-, -β-äthylhexyl-, -decyl-, -undecyl- oder -dodecylamid, Acetessigsäuremorpholid, Acetessigsäurecyclohexylamid, Acetessigsäure-N-methyl-N-cyclohecylamid, Acetessigsäurepiperidid, Acetessigsäuremethoxyäthylamid, Acetessigsäureisopropoxypropylamid, Chloracetessigsäure- butyl-, -hexyl- oder -β-äthylhexylamid, Benzoylessigsäure- äthyl-, -propyl-, -butyl-, -pentyl-, -hexyl-, -octyl-, -decyl- oder -dodecylamid, Acetessigsäure-N-äthyl-, -propyl-, -isopropyl- oder -butyl-N-pentyl-, -hexyl- oder -octylamid, Acetessigsäurecyclohexylmethylenamid.

Die erfindungsgemässen 1 : 2-Kobaltkomplexfarbstoffe eignen sich zum Färben oder Bedrucken verschiedener Stoffe, wie stickstoffgruppenhaltiger Materialien. Die bevorzugte Verwendung der erfindungsgemässen 1 : 2-Kobaltkomplexfarbstoffe liegt im Färben von Leder und Seide und insbesondere von Wolle und Polyamid. Sie sind vor allem zum Färben aus schwach alkalischem, neutralem oder schwach saurem, z. B. essigsaurem Bad geeignet. Man erhält mit den erfindungsgemässen 1 : 2-Kobaltkomplexfarbstoffen braungelbe bis grünstichiggelbe Färbungen mit guten Allgemeinechtheiten und insbesondere sehr guter Lichtechtheit und sehr guten Nassechtheiten, wie z. B. Wasch- und Kochechtheiten, und die Farbstoffe neigen bei Belichtung nicht zum Ausbleichen (Catalytic Fading). Ferner eignen sich die Aminsalze der erfindungsgemässen 1 : 2-Kobaltkomplexfarbstoffe als Lackfarbstoffe.

Die Färbeflotten oder Druckpasten enthalten in der Regel weitere Zusätze, beispielsweise Egalisierhilfsmittel, Netzmittel, Antischaummittel oder die Eigenschaft des Textilmaterials beeinflussende Mittel, wie z. B. Weichmachungsmittel, Zusätze zum Flammfestausrüsten oder schmutz-, wasser- und ölabweisende Mittel.

Besonders hervorzuheben ist, dass mit den erfindungsgemässen 1 : 2-Kobaltkomplexen ein Faserschutz für Polyamid erzielt wird.

Das oben genannte Textilmaterial kann in den verschiedensten Verarbeitungsformen vorliegen, wie z. B. als Faser, Garn, Gewebe oder Gewirke.

Aus der FR-A-1 068 477 ist ein ähnlicher Farbstoff bekannt, der jedoch nicht alle guten Eigenschaften der erfindungsgemässen Farbstoffe aufweist.

In den folgenden Beispielen stehen Teile für Gewichtsteile. Die Temperaturen sind Celsiusgrade. Die Beziehung zwischen Gewichtsteilen und Volumenteilen ist dieselbe wie diejenigen zwischen Gramm und Kubikzentimeter.

Beispiel 1

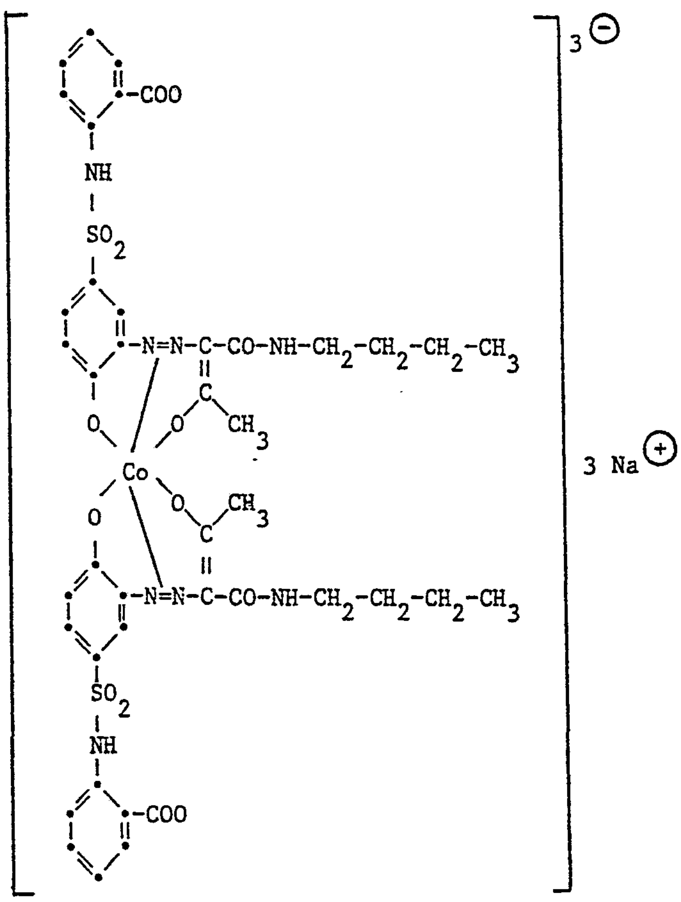

44,6 Teile des Monoazofarbstoffes, der durch Kupplung des diazotierten 2'-Carboxy-2-aminophenol-4-sulfanilid auf Acetessigsäurebutylamid erhalten wird, werden in 500 Teile Wasser eingetragen und mit 60 Teilen einer 1 molaren Kobaltsulfatlösung versetzt. Man erhitzt das Reaktionsgemisch auf 80° und hält durch Zutropfen von 2 molarer Natronlauge bei einem pH-Wert von 6 bis 9. Zur Beschleunigung der Metallisierung können 100 Teile 5 % Wasserstoffperoxid zugegeben werden. Nach Beendigung der Metallisierung wird der kobalthaltige Farbstoff sprühgetrocknet. Der erhaltene Farbstoff färbt Wolle, Seide, Polyamid und Leder in einem gelben Farbton mit guten Licht- und Nassechtheiten.

Verwendet man anstelle der 44,6 Teile des oben angegebenen Monoazofarbstoffes 46,0 Teile des durch Kupplung von diazotiertem 2'-Carboxy-2-aminophenol-4-sulfanilid auf Acetessigsäurepentylamid erhaltenen Farbstoffes, so erhält man nach der Metallisierung einen symmetrischen 1 : 2-Kobaltkomplexfarbstoff der Wolle, Seide, Polyamid und Leder in gelbem Farbton mit guten Licht- und Nassechtheiten färbt.

An Stelle der Sprühtrocknung kann der Farbstoff auch durch Zugabe von Natrium-, oder/und Kalium- oder/und Lithiumchlorid oder/und -Sulfat isoliert werden. Der Farbstoff enthält dann das entsprechende Kation. Das Kation übt praktisch keinen wesentlichen Einfluss auf die Nuance aus.

Möchte man den Farbstoff salzfrei isolieren, dann wird der Farbstoff der Umkehrosmose unterworfen.

In der nachfolgenden Tabelle sind weitere 1 : 2-Kobaltkomplexfarbstoffe angeführt, die nach den Angaben des Beispiels 1 aus den Farbstoffen der Kolonne I erhältlich sind. Die 1 : 2-Kobaltkomplexe färben Wolle, Seide, Polyamid und Leder in der in Kolonne II angegebenen Nuance.

(Siehe Tabelle 1 Seite 8 f.)

Tabelle 1

| Nr. | I<br>Monoazofarbstoff | II<br>Nuance |
|---|---|---|
| 1 | 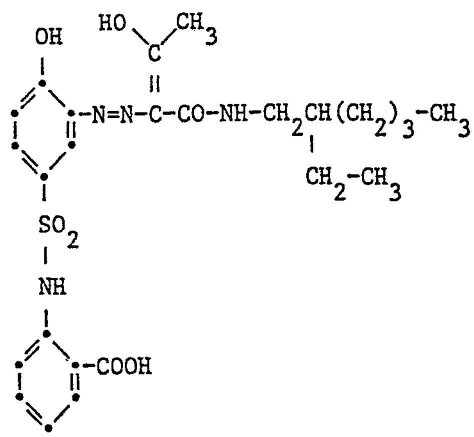 | gelb |
| 2 | 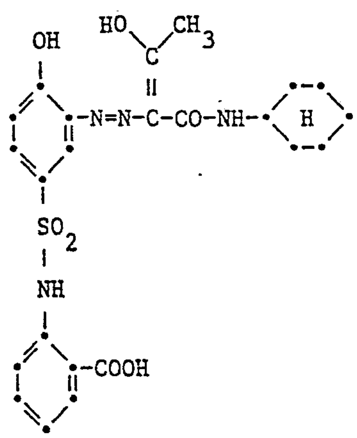 | gelb |
| 3 | 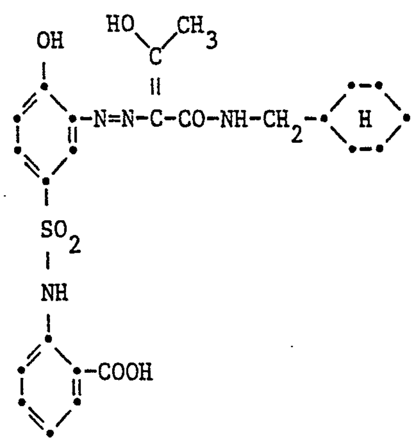 | gelb |

Tabelle 1 (Fortsetzung)

| Nr. | Monoazofarbstoff | Nuance |
|---|---|---|
| 4 | 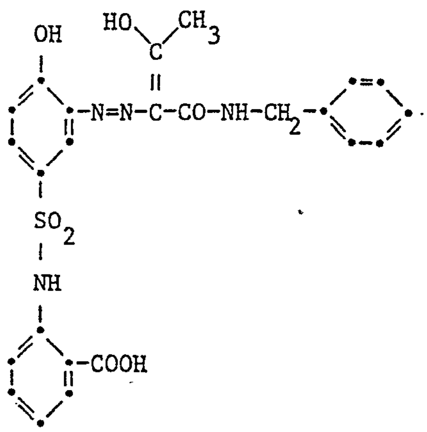 | gelb |
| 5 | 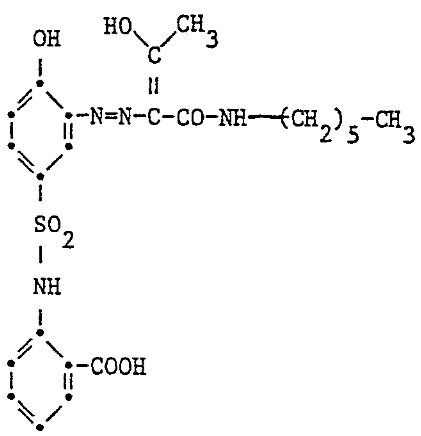 | gelb |
| 6 | 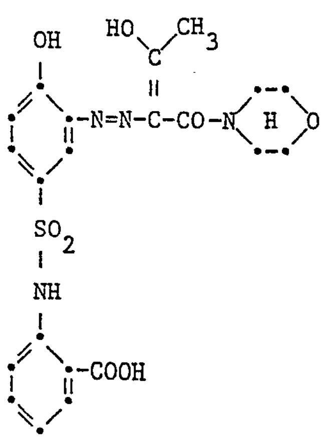 | braun-gelb |

Tabelle 1 (Fortsetzung)

| Nr. | Monoazofarbstoff | Nuance |
|---|---|---|
| 7 | 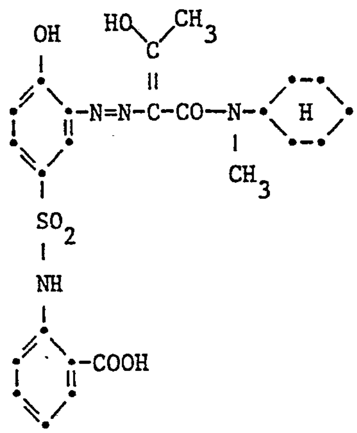 | braun-gelb |
| 8 | 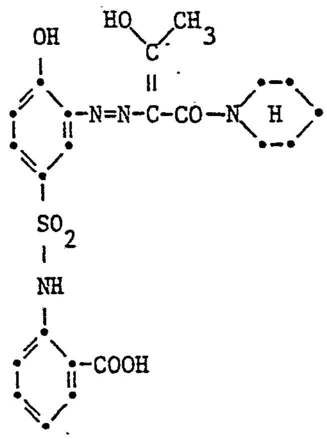 | braun-gelb |
| 9 | 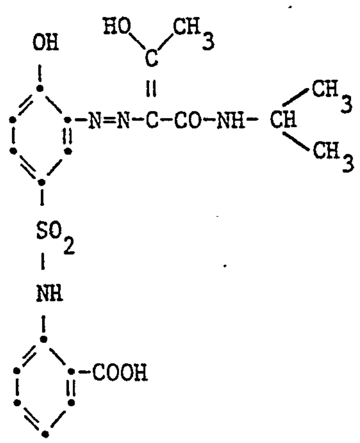 | gelb |

Tabelle 1 (Fortsetzung)

| Nr. | Monoazofarbstoff | Nuance |
|---|---|---|
| 10 | 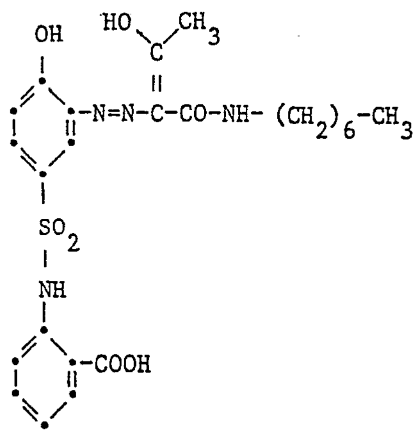 | gelb |
| 11 | 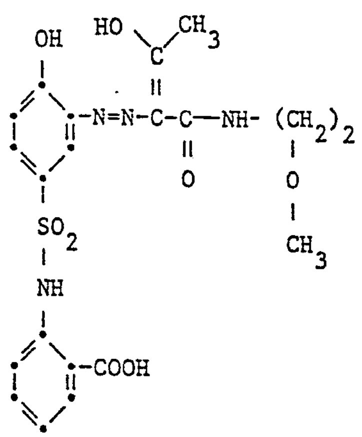 | grünstichig gelb |
| 12 | 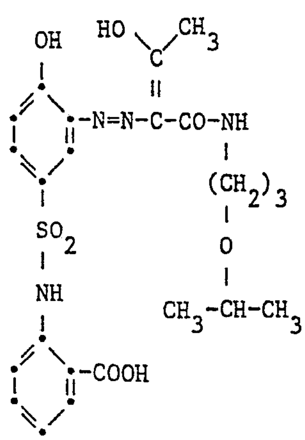 | grünstichig gelb |

Tabelle 1 (Fortsetzung)

| Nr. | Monoazofarbstoff | Nuance |
|---|---|---|
| 13 | 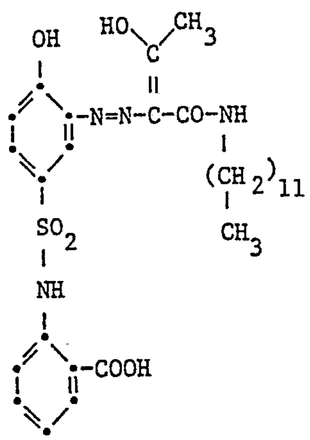 | gelb |
| 14 | 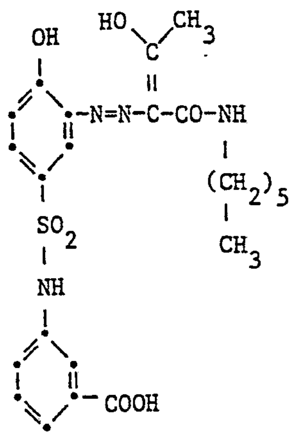 | gelb |
| 15 | 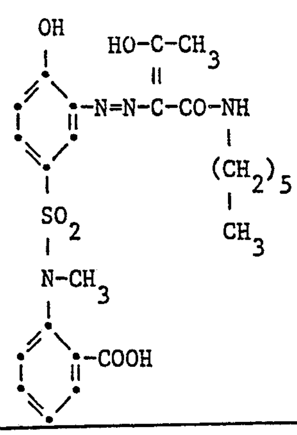 | gelb |

Tabelle 1 (Fortsetzung)

| Nr. | Monoazofarbstoff | Nuance |
|---|---|---|
| 16 | 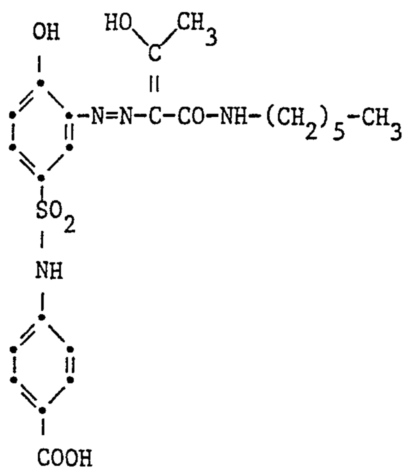 | gelb |
| 17 | 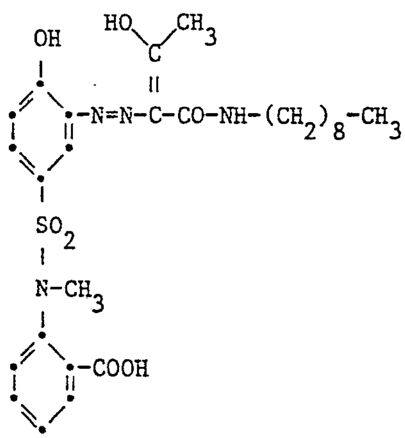 | gelb |
| 18 | 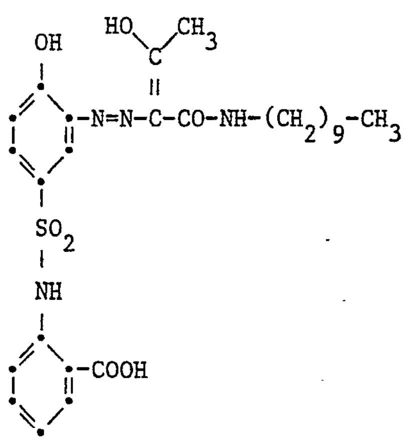 | gelb |

Beispiel 2

Mischung der 1 : 2-Kobaltkomplexazofarbstoffe der Formeln

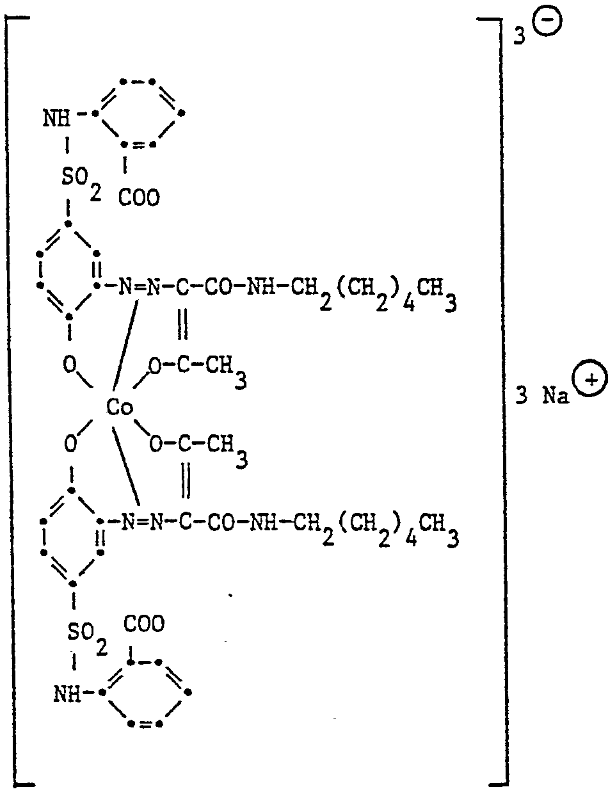

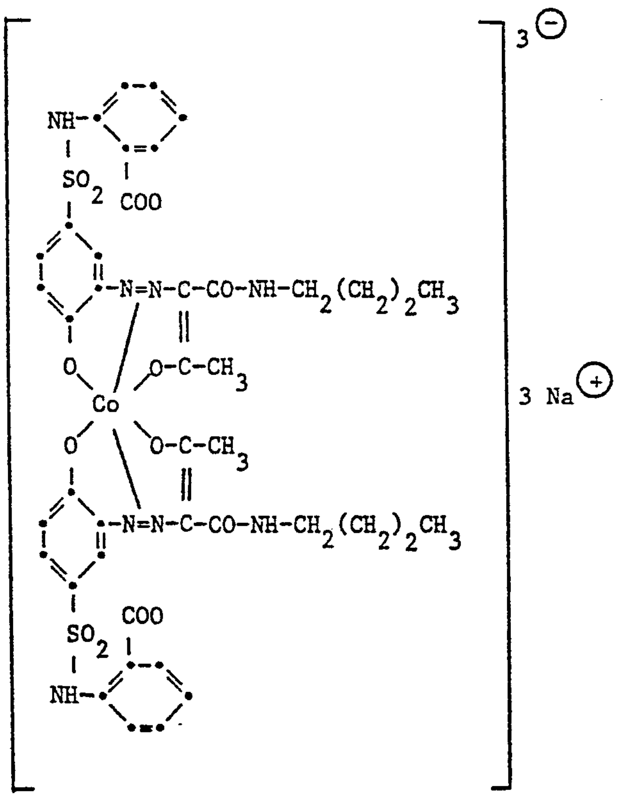

und

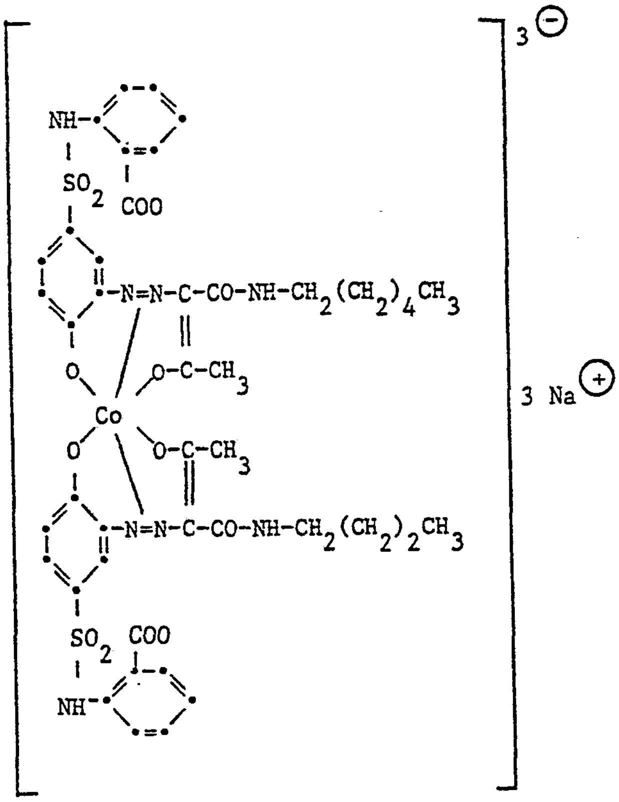

22,3 Teile des Monoazofarbstoffes, der erhalten wird aus diazotiertem 2'-Carboxy-2-aminophenol-4-sulfanilid und Kupplung auf Acetessigsäurebutylamid, sowie 24,5 Teile des Monoazofarbstoffes, der erhalten wird aus diazotiertem 2'-Carboxy-2-aminophenol-4-sulfanilid und Kupplung auf Acetessigsäurehexylamid werden in 500 Teile Wasser eingetragen und mit 60 Teilen einer 1 molaren Kobaltsulfat/Weinsäure-Lösung bei 80° und einem pH-Wert von 6 bis 9 metallisiert. Anschliessend wird die Reaktionsmischung mit Kochsalz versetzt und das Farbstoffgemisch der angegebenen Formeln abfiltriert und getrocknet. Man erhält ein gelbbraunes Pulver, welches Wolle, Seide, Polyamid und Leder in einem gelben Farbton mit guten Echtheiten färbt.

Färbevorschrift für Polyamid

100 Teile Polyamidstrickgarn werden bei 50 °C in ein Färbebad eingeführt, das auf 4 000 Teile Wasser 2 Teile des Farbstoffes des Beispiels 1, 1,4 Teile Ammoniumsulfat und 2 Teile eines Egalisierhilfsmittels enthält. Die Flotte wird im Verlaufe von 45 Minuten zum Sieden gebracht und während weiterer 45 Minuten bei Kochtemperatur gehalten. Darauf wird das Färbegut herausgenommen, mit kaltem Wasser gründlich gespült und getrocknet. Man erhält ein gelbgefärbtes Polyamid mit guten Echtheitseigenschaften.

Färbevorschrift für Wolle

100 Teile Wollstrickgarn werden bei 50 °C in ein Färbebad eingeführt, das auf 4 000 Teile Wasser 2 Teile des Farbstoffs des Tabellenbeispiels 2, 4 Teile Essigsäure 80 % und 2 Teile eines Egalisierhilfsmittels enthält. Die Flotte wird im Verlaufe von 45 Minuten zum Sieden gebracht und während weiterer 45 Minuten bei Kochtemperatur gehalten. Darauf wird das Färbegut herausgenommen, mit kaltem Wasser gründlich gespült und getrocknet. Man erhält eine gelbgefärbte Wolle mit guten Echtheitseigenschaften.

Färbevorschrift für Leder :

100 Teile Bekleidungsvelourleder werden bei 50 °C in einer Lösung von 1 000 Teilen Wasser und 2 Teilen 25 % igem Ammoniak während 2 Stunden aufgewalkt und anschliessend bei 60 °C in einer Lösung von 1 000 Teilen Wasser, 2 Teilen 24 % igem Ammoniak und 3 Teilen Farbstoff des Tabellenbeispiels 3 während 1 Stunde gefärbt. Hierauf gibt man eine Lösung von 40 Teilen Wasser und 4 Teilen 85 %iger Ameinsensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50 °C behandelt. Man erhält eine gelbe Färbung mit guten Echtheiten.

Färbebeispiel :

100 Teile Polyamidmaterial (Helanca-Trikot) werden bei 50 °C in ein Färbebad eingeführt, das auf 5 000 Teile Wasser, 0,3 Teile des Farbstoffs aus Tabellenbeispiel 5, 1,2 Teile des blauen Farbstoffs der Formel

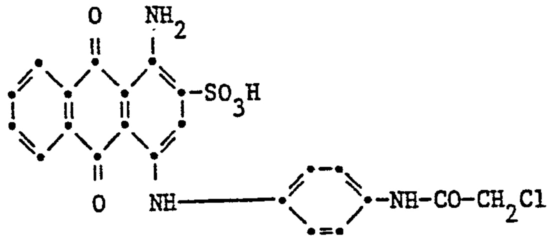

3 Teile Ammonsulfat und 1 Teil eines Egalisierhilfsmittels enthält. Die Flotte wird im Verlauf von 45 Minuten zum Sieden gebracht und während weiterer 60 Minuten bei Kochtemperatur gehalten. Darauf wird das Färbegut herausgenommen, mit kaltem Wasser gründlich gespült und getrocknet. Man erhält ein in reinem Grünton gefärbtes Polyamidmaterial mit guten Echtheitseigenschaften, das kein Catalytic Fading zeigt.

**Patentansprüche**

1. 1 : 2-Kobaltkomplexe von Azoverbindungen der Formel

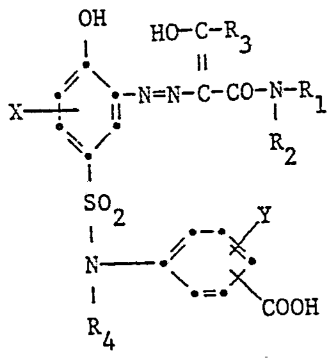

(1),

worin $R_1$ ein geradkettiger oder verzweigter $C_{1-12}$-Alkyl-, ein Cycloalkyl- oder ein Aralkylrest, der substituiert sein kann, und $R_2$ Wasserstoff oder $C_{1-4}$-Alkyl ist, oder worin $R_1$ und $R_2$ zusammen mit dem sie verbindenden Stickstoffatom einen heterocyclischen Ring bilden, der ein weiteres Heteroatom enthalten kann, und worin $R_3$ ein Methyl- oder Phenylrest, der substituiert sein kann, $R_4$ Wasserstoff oder $C_{1-4}$-Alkyl, X Wasserstoff, Halogen, Nitro oder $C_{1-4}$-Alkyl und Y Wasserstoff, Halogen, Nitro, $C_{1-4}$-Alkyl oder Carboxy ist, wobei zwei gleiche oder zwei voneinander verschiedene Moleküle einer Azoverbindung der Formel (1) an ein Kobaltatom gebunden sind.

2. 1 : 2-Kobaltkomplexe von Azoverbindungen gemäss Anspruch 1, worin $R_4$ Methyl, Aethyl oder insbesondere Wasserstoff ist.

3. 1 : 2-Kobaltkomplexe von Azoverbindungen gemäss Anspruch 1, worin $R_3$ Chlormethyl, Phenyl oder insbesondere Methyl ist.

4. 1 : 2-Kobaltkomplexe von Azoverbindungen gemäss Anspruch 1, worin $R_1$ ein geradkettiger oder verzweigter $C_{5-12}$-Alkyl-, ein Cycloalkyl- oder ein Aralkylrest, der substituiert sein kann, und $R_2$ Wasserstoff oder $C_{1-4}$-Alkyl ist, oder worin $R_1$ und $R_2$ zusammen mit dem sie verbindenden Stickstoffatom einen heterocyclischen Ring bilden, der ein weiteres Heteroatom enthalten kann.

5. 1 : 2-Kobaltkomplexe von Azoverbindungen gemäss Anspruch 4 der Formel

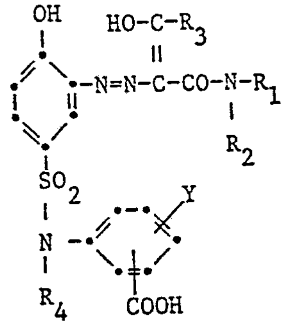

(2),

worin $R_1$, $R_2$, $R_3$, $R_4$ und Y die in Anspruch 4 angegebenen Bedeutungen haben.

6. 1 : 2-Kobaltkomplexe von Azoverbindungen gemäss Anspruch 3 der Formel

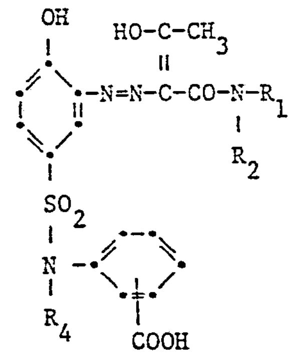

(3),

worin $R_1$ ein geradkettiger oder verzweigter $C_{2-12}$-Alkylrest, der durch $C_{1-4}$-Alkoxy substituiert sein kann, ein Cyclohexyl-, Cyclohexylmethylen- oder Benzylrest und $R_2$ Wasserstoff oder Methyl ist, oder worin $R_1$ und $R_2$ zusammen mit dem sie verbindenden Stickstoffatom einen Piperidin- oder Morpholinrest bilden und $R_4$ Wasserstoff oder Methyl ist.

7. 1 : 2-Kobaltkomplexe von Azoverbindungen gemäss Anspruch 6, worin $R_2$ und $R_4$ Wasserstoff bedeuten.

8. 1 : 2-Kobaltkomplexe von Azoverbindungen gemäss Anspruch 6 der Formel

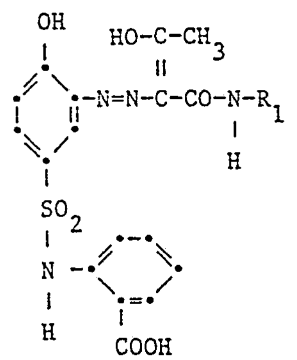

(4),

worin $R_1$ die in Anspruch 6 angegebene Bedeutung hat.

9. 1 : 2-Kobaltkomplexe von Azoverbindungen gemäss Anspruch 8, worin $R_1$ ein $C_{5-12}$-Alkylrest ist.

10. 1 : 2-Kobaltkomplexe von Verbindungen gemäss einem der Ansprüche 6 und 8, worin zwei identische Azoverbindungen an das Kobaltatom gebunden sind.

11. Der 1 : 2-Kobaltkomplex gemäss Anspruch 9 der Formel

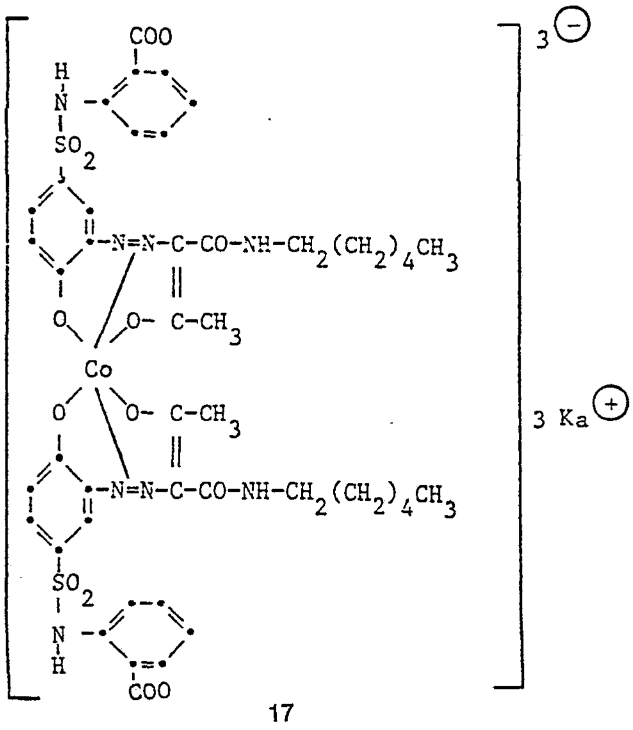

(5),

worin Ka$^{\oplus}$ ein Alkalikation, ein Ammoniumion oder das Kation eines organischen Amins, insbesondere ein Lithium-, Kalium- oder vorzugsweise Natriumkation ist.

12. Verfahren zur Herstellung von 1 : 2-Kobaltkomplexen von Azoverbindungen der Formel

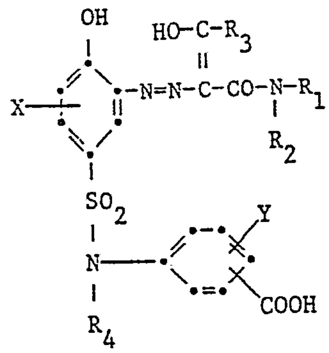

(1),

worin $R_1$ ein geradkettiger oder verzweigter $C_{1-12}$-Alkyl-, ein Cycloalkyl- oder ein Aralkylrest, der substituiert sein kann, und $R_2$ Wasserstoff oder $C_{1-4}$-Alkyl ist, oder worin $R_1$ und $R_2$ zusammen mit dem sie verbindenden Stickstoffatom einen heterocyclischen Ring bilden, der ein weiteres Heteroatom enthalten kann, und worin $R_3$ ein Methyl- oder Phenylrest, der substituiert sein kann, $R_4$ Wasserstoff oder $C_{1-4}$-Alkyl, X Wasserstoff, Halogen, Nitro oder $C_{1-4}$-Alkyl und Y Wasserstoff, Halogen, Nitro, $C_{1-4}$-Alkyl oder Carboxy ist, wobei zwei gleiche oder zwei voneinander verschiedene Moleküle einer Azoverbindung der Formel (1) an ein Kobaltatom gebunden sind, dadurch gekennzeichnet, dass man zwei gleiche oder zwei voneinander verschiedene Azoverbindungen der Formel (1) mit einem kobaltabgebenden Mittel umsetzt.

13. Verfahren zum Färben oder Bedrucken von Leder und Seide und insbesondere von Wolle und Polyamid mit 1 : 2-Kobaltkomplexazofarbstoffen, dadurch gekennzeichnet, dass man 1 : 2-Kobaltkomplexazofarbstoffe gemäss einem der Ansprüche 1 bis 11 bzw. die gemäss Anspruch 12 erhaltenen 1 : 2-Kobaltkomplexazofarbstoffe verwendet.

14. Verfahren gemäss Anspruch 13, dadurch gekennzeichnet, dass man die 1 : 2-Kobaltkomplexazofarbstoffe in Kombination mit anderen Farbstoffen insbesondere blauen Farbstoffen verwendet.

15. Färbe- bzw. Druckpräparate, die 1 : 2-Kobaltkomplexfarbstoffe gemäss den Ansprüchen 1 bis 11 enthalten.

16. Das gemäss Anspruch 13 gefärbte oder bedruckte Material, insbesondere das Textilmaterial.

**Claims**

1. A 1 : 2 cobalt complex of an azo compound of the formula

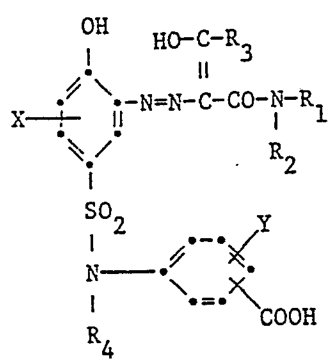

(1)

in which $R_1$ is a straight chain or branched $C_{1-12}$ alkyl radical, a cycloalkyl radical or an aralkyl radical, each of which may be substituted, and $R_2$ is hydrogen or $C_{1-4}$ alkyl, or $R_1$ and $R_2$, together with the nitrogen atom to which they are attached, are a heterocyclic ring which may contain a further hetero atom, $R_3$ is a methyl or phenyl radical, each of which may be substituted, $R_4$ is hydrogen or $C_{1-4}$ alkyl, X is hydrogen, halogen, nitro or $C_{1-4}$ alkyl and Y is hydrogen, halogen, nitro, $C_{1-4}$ alkyl or carboxy, two identical or different molecules of an azo compound of the formula (1) being bonded to one cobalt atom.

2. A 1 : 2 cobalt complex of an azo compound according to claim 1, in which $R_4$ is methyl, ethyl or, in particular, hydrogen.

3. A 1 : 2 cobalt complex of an azo compound according to claim 1, in which $R_3$ is chloromethyl, phenyl or, in particular, methyl.

4. A 1 : 2 cobalt complex of an azo compound according to claim 1, in which $R_1$ is a straight chain or branched $C_{5-12}$-alkyl radical, a cycloalkyl radical or an aralkyl radical, each of which may be substituted, and $R_2$ is hydrogen or $C_{1-4}$ alkyl, or $R_1$ and $R_2$, together with the nitrogen atom to which they are attached, are a heterocyclic ring which may contain a further hetero atom.

5. A 1 : 2 cobalt complex of an azo compound according to claim 4 of the formula

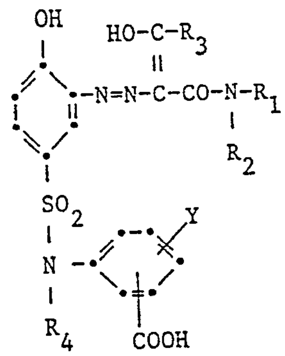

(2)

in which $R_1$, $R_2$, $R_3$, $R_4$ and Y are as defined in claim 4.

6. A 1 : 2 cobalt complex of an azo compound according to claim 3 of the formula

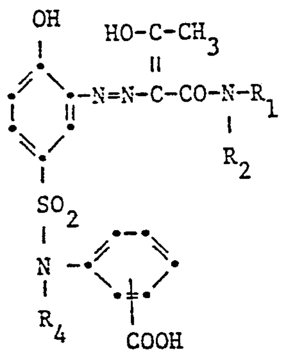

(3)

in which $R_1$ is a straight chain or branched $C_{2-12}$ alkyl radical which may be substituted by $C_{1-4}$ alkoxy, or is a cyclohexyl, cyclohexylmethylene or benzyl radical and $R_2$ is hydrogen or methyl, or $R_1$ and $R_2$, together with the nitrogen atom to which they are attached, are a piperidine or morpholine radical, and $R_4$ is hydrogen or methyl.

7. A 1 : 2 cobalt complex of an azo compound according to claim 6, in which $R_2$ and $R_4$ are hydrogen.

8. A 1 : 2 cobalt complex of an azo compound according to claim 6 of the formula

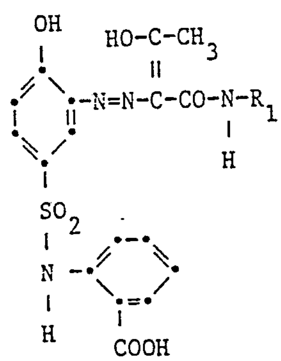

(4)

in which $R_1$ is a defined in claim 6.

9. A 1 : 2 cobalt complex of an azo compound according to claim 8, in which $R_1$ is a $C_{5-12}$ alkyl radical.

10. A 1 : 2 cobalt complex of a compound according to either of claims 6 or 8, in which two identical azo compounds are bonded to the cobalt atom.

11. A 1 : 2 cobalt complex according to claim 9 of the formula

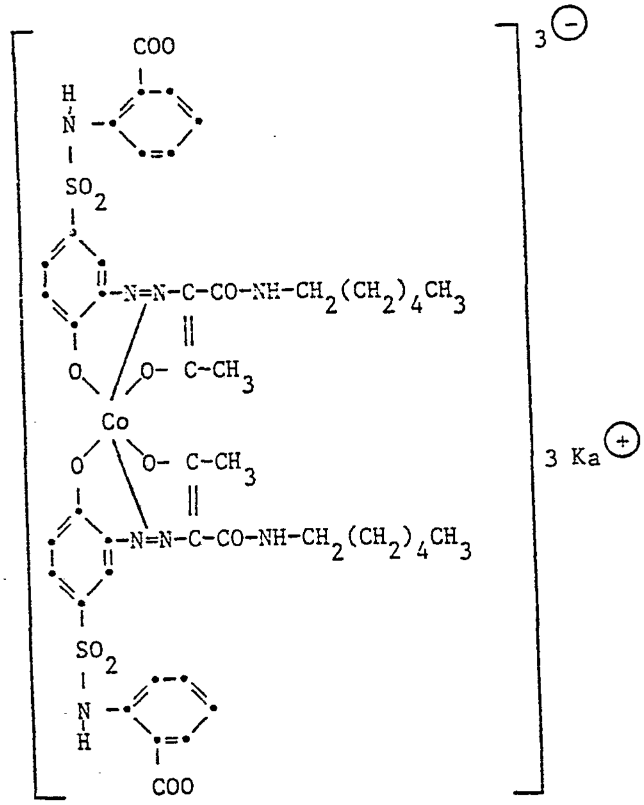

(5)

in which Ka$^{\oplus}$ is an alkali metal cation, an ammonium ion or the cation of an organic amine, in particular a lithium, potassium or, preferably, sodium cation.

12. A process for the preparation of a 1 : 2 cobalt complex of an azo compound of the formula

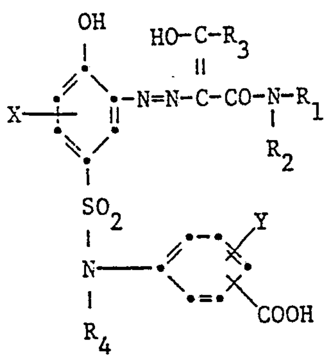

(1)

in which $R_1$ is a straight chain or branched $C_{1-12}$ alkyl radical, a cycloalkyl radical or an aralkyl radical, each of which may be substituted, and $R_2$ is hydrogen or $C_{1-4}$ alkyl, or $R_1$ and $R_2$, together with the nitrogen atom to which they are attached, are a heterocyclic ring which may contain a further hetero atom, $R_3$ is a methyl or phenyl radical, each of which may be substituted, $R_4$ is hydrogen or $C_{1-4}$ alkyl, X is hydrogen, halogen, nitro or $C_{1-4}$ alkyl and Y is hydrogen, halogen, nitro, $C_{1-4}$ alkyl or carboxy, two identical or different molecules of an azo compound of the formula (1) being bonded to one cobalt atom, which process comprises reacting two identical or different azo compounds of the formula (1) with a cobalt donor.

13. A process for dyeing or printing leather and silk and, in particular, wool and polyamide with a 1 : 2 cobalt complex azo dye, which comprises using a 1 : 2 cobalt complex azo dye according to any one of claims 1 to 11 or a 1 : 2 cobalt complex azo dye obtained according to claim 12.

14. A process according to claim 13, wherein the 1 : 2 cobalt complex azo dye is used in combination with other dyes, in particular blue dyes.

15. A dyeing or printing preparation containing a 1 : 2 cobalt complex dye according to any one of claims 1 to 11.

16. The material, in particular textile material, dyed or printed according to claim 13.

**Revendications**

1. Complexes de cobalt 1 : 2 de composés azoïques de formule :

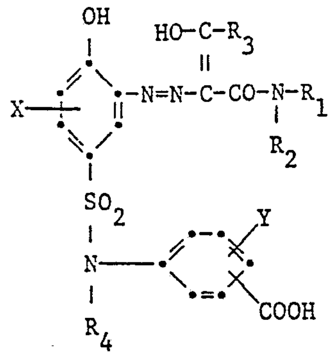

(1),

dans laquelle $R_1$ est un radical alkyle en $C_{1-12}$ à chaîne droite ou ramifiée, un radical cycloalkyle, ou un radical aralkyle, qui peut être substitué, et $R_2$ est un atome d'hydrogène ou un groupe alkyle en $C_{1-4}$, ou bien dans laquelle $R_1$ et $R_2$ forment ensemble, avec l'atome d'azote auquel ils sont liés, un noyau hétérocyclique, qui peut contenir un autre hétéroatome, et dans laquelle $R_3$ est un radical méthyle ou phényle, qui peut être substitué, $R_4$ est un atome d'hydrogène ou un groupe alkyle en $C_{1-4}$, X est un atome d'hydrogène, un halogène, un groupe nitro ou un groupe alkyle en $C_{1-4}$, et Y est un atome d'hydrogène, un halogène, un groupe nitro, un groupe alkyle en $C_{1-4}$ ou un groupe carboxy, deux molécules, identiques ou différentes l'une de l'autre, d'un composé azoïque de formule (1) étant liées à un atome de cobalt.

2. Complexes de cobalt 1 : 2 de composés azoïques selon la revendication 1, dans lesquels $R_4$ est un groupe méthyle, éthyle, ou en particulier un atome d'hydrogène.

3. Complexes de cobalt 1 : 2 de composés azoïques selon la revendicaiton 1, dans lesquels $R_3$ est un groupe chlorométhyle, phényle, ou en particulier méthyle.

4. Complexes de cobalt 1 : 2 de composés azoïques selon la revendication 1, dans lesquels $R_1$ est un radical alkyle en $C_{5-12}$ à chaîne droite ou ramifiée, un radical cycloalkyle, ou un radical aralkyle, qui peut être substitué, et $R_2$ est un atome d'hydrogène ou un groupe alkyle en $C_{1-4}$, ou bien dans lesquels $R_1$ et $R_2$ forment ensemble, avec l'atome d'azote auquel ils sont liés, un noyau hétérocyclique qui peut contenir un autre hétéroatome.

5. Complexes de cobalt 1 : 2 de composés azoïques selon la revendication 4, de formule :

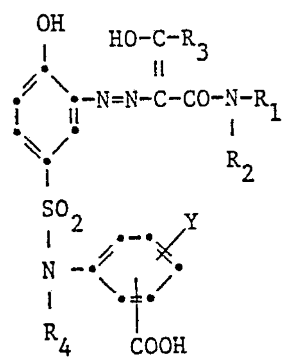

(2),

dans laquelle $R_1$, $R_2$, $R_3$, $R_4$ et Y ont les significations indiquées dans la revendication 4.

6. Complexes de cobalt 1 : 2 de composés azoïques selon la revendication 3, de formule :

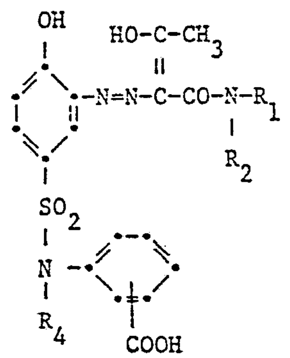

(3),

dans laquelle $R_1$ est un radical alkyle en $C_{2-12}$ à chaîne droite ou ramifiée, qui peut être substitué par un groupe alcoxy en $C_{1-4}$, un radical cyclohexyle, cyclohexylméthylène, ou benzyle, et $R_2$ est un atome d'hydrogène ou un groupe méthyle, ou bien dans laquelle $R_1$ et $R_2$ forment ensemble, avec l'atome d'azote auquel ils sont liés, un noyau pipéridine ou morpholine, et $R_4$ est un atome d'hydrogène ou un groupe méthyle.

7. Complexes de cobalt 1 : 2 de composés azoïques selon la revendication 6, dans lesquels $R_2$ et $R_4$ représentent un atome d'hydrogène.

8. Complexes de cobalt 1 : 2 de composés azoïques selon la revendication 6, de formule :

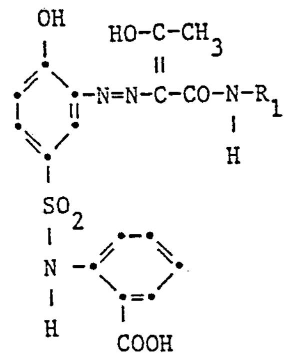

(4),

dans laquelle $R_1$ a la signification indiquée dans la revendication 6.

9. Complexes de cobalt 1 : 2 de composés azoïques selon la revendication 8, dans lesquels $R_1$ est un radical alkyle en $C_{5-12}$.

10. Complexes de cobalt 1 : 2 de composés selon l'une des revendications 6 et 8, dans lesquels deux composés azoïques identiques sont liés à l'atome de cobalt.

11. Le complexe de cobalt 1 : 2 selon la revendication 9, de formule :

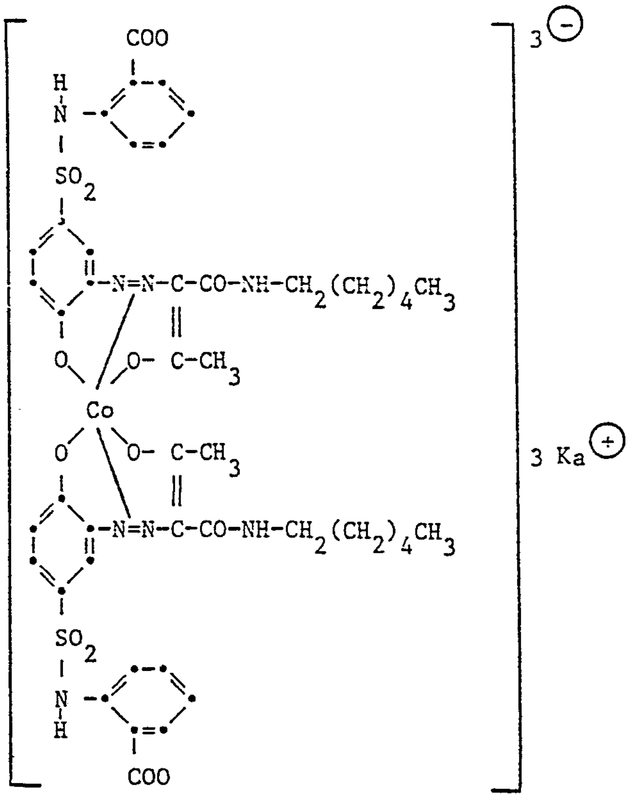

(5)

dans lequel $Ka^{\oplus}$ est un cation alcalin, un ion ammonium, ou le cation d'une amine organique, en particulier un cation lithium, potassium, ou de préférence sodium.

12. Procédé de préparation de complexes de cobalt 1 : 2 de composés azoïques de formule :

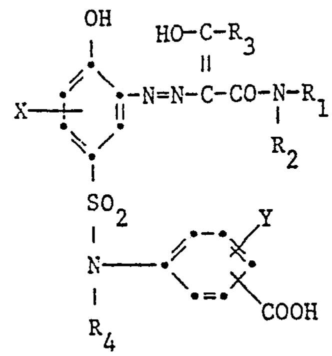

(1),

dans laquelle $R_1$ est un radical alkyle en $C_{1-12}$ à chaîne droite ou ramifiée, un radical cycloalkyle ou un radical aralkyle, qui peut être substitué, et $R_2$ est un atome d'hydrogène ou un groupe alkyle en $C_{1-4}$, ou bien dans laquelle $R_1$ et $R_2$ forment ensemble, avec l'atome d'azote auquel ils sont liés, un noyau hétérocyclique qui peut contenir un autre hétéroatome, et dans laquelle $R_3$ est un radical phényle ou méthyle, qui peut être substitué, $R_4$ est un atome d'hydrogène ou un groupe alkyle en $C_{1-4}$, X est un atome d'hydrogène, un halogène, un groupe nitro ou un groupe alkyle en $C_{1-4}$, et Y est un atome d'hydrogène, un halogène, un groupe nitro, alkyle en $C_{1-4}$, ou carboxy, deux molécules, identiques ou différentes l'une de l'autre, d'un composé azoïque de formule (1) étant liées sur un atome de cobalt, caractérisé en ce que l'on fait réagir deux composés azoïques identiques ou différents l'un de l'autre de formule (1) avec un agent fournissant du cobalt.

13. Procédé de teinture et d'impression du cuir et de la soie, et en particulier de la laine et du polyamide, avec des colorants azoïques à complexes de cobalt 1 : 2, caractérisé en ce que l'on utilise les colorants azoïques à complexes de cobalt 1 : 2 conformes à l'une des revendications 1 à 11, ou les colorants azoïques à complexes de cobalt 1 : 2 obtenus selon la revendication 12.

14. Procédé selon la revendication 13, caractérisé en ce que l'on utilise les colorants azoïques à complexes de cobalt 1 : 2 en combinaison avec d'autres colorants, en particulier des colorants bleus.

15. Préparations pour la teinture ou l'impression, qui contiennent des colorants à complexes de cobalt 1 : 2 conformes aux revendications 1 à 11.

16. Matériaux imprimés ou teints selon la revendication 13, en particulier matériaux textiles.